# FASCICULE DE BREVET EUROPEEN

(11) **EP 1 538 076 B1**
(45) Date de publication et mention de la délivrance du brevet: **17.01.2007**
(21) Numéro de dépôt: 04292463.9
(22) Date de dépôt: 18.10.2004
(51) Int. Cl.: B64D 1/00

(54) **Procédé et dispositif d'aide au parachutage**
Verfahren und Vorrichtung zum Unterstützen von Fallschirmabwürfen
Method and device for supporting the dropping of parachutes

(30) Priorité: 04.12.2003 FR 0314240
(43) Date de publication de la demande: 08.06.2005
(73) Titulaire: AIRBUS France, 31060 Toulouse (FR)
(72) Inventeur: Haas, Philippe, 31300 Toulouse (FR)
(74) Mandataire: Hauer, Bernard

(56) Documents cités:
- WO-A-03/018401
- DE-C- 4 339 251
- ROBERT P.: 'Le Grand Robert de la Langue Française: Dictionnaire Alphabétique et Analogique de la Langue Française, Deuxième Edition', 1985, LE ROBERT, PARIS * page 622 *

## Description

La présente invention concerne un procédé et un dispositif d'aide au parachutage.

Elle s'applique au parachutage à partir d'un aéronef, en particulier d'un avion de transport militaire, d'éléments, notamment du matériel ou des troupes, qui doivent être parachutés sur une zone de réception prédéterminée au sol, cf DE 4339251. Pour réaliser un tel parachutage, on détermine généralement :
- un point de lâcher où les éléments à parachuter doivent être lâchés dudit aéronef, ledit point de lâcher dépendant d'un point de réception prédéterminé situé sur ladite zone de réception au sol ; et
- un point d'alignement qui forme avec ledit point de lâcher une droite de référence qui est parallèle à un axe prévu sur la zone de réception, ledit point d'alignement étant situé à une distance prédéterminée dudit point de lâcher, en amont de ce dernier dans le sens de vol de l'aéronef.

Pour mettre en oeuvre le parachutage :
- on guide l'aéronef le long de ladite droite de référence ; et
- lors de ce guidage, on réalise le lâcher desdits éléments à parachuter entre ledit point de lâcher et un point en aval de fin de parachutage.

En fonction de la quantité de matériel à parachuter ou du nombre de personnes à parachuter, la taille de la zone de réception peut être insuffisante pour que tout le parachutage prévu puisse être réalisé lors d'un seul passage de l'aéronef au-dessus de ladite zone de réception. Dans un tel cas, après un premier passage, le pilote doit ramener l'aéronef audit point de lâcher, à l'aide d'un pilotage manuel, pour réaliser au moins un passage supplémentaire en vue d'un parachutage supplémentaire. Un tel pilotage n'est en général pas simple à réaliser et, de plus, requiert toute l'attention du pilote.

La présente invention a pour objet de remédier à cet inconvénient. Elle concerne un procédé de parachutage à partir d'un aéronef d'éléments (troupes, matériel, ...) à parachuter sur une zone de réception au sol, permettant de réaliser automatiquement une pluralité de parachutages.

A cet effet, selon l'invention, ledit procédé, selon lequel :
- on détermine :
   . un point de lâcher où les éléments à parachuter doivent être lâchés dudit aéronef, ledit point de lâcher dépendant d'un point de réception prédéterminé situé sur ladite zone de réception au sol ;
   . un point d'alignement qui forme avec ledit point de lâcher une droite de référence qui est parallèle à un axe prévu sur la zone de réception, ledit point d'alignement étant situé à une distance prédéterminée dudit point de lâcher, en amont de ce dernier dans le sens de vol de l'aéronef ;
   . un premier point d'extrémité qui est situé sur ladite droite de référence en aval dudit point de lâcher, à un point où le lâcher des éléments à parachuter doit cesser pour éviter qu'ils dépassent ladite zone de réception ; et
   . un second point d'extrémité qui est situé sur ladite droite de référence en aval dudit premier point d'extrémité, à un point où se termine une séquence de parachutage ; et
- pour réaliser une première séquence de parachutage :
   . on guide l'aéronef le long de ladite droite de référence ; et
   . lors de ce guidage, on réalise le lâcher d'au moins certains desdits éléments à parachuter, et ceci uniquement entre ledit point de lâcher et ledit premier point d'extrémité,
est remarquable, selon l'invention, en ce que :
- on détermine, de plus, un circuit de vol permettant à l'aéronef de revenir, à partir dudit second point d'extrémité, audit point d'alignement, puis de suivre ladite droite de référence jusqu'audit second point d'extrémité ; et
- pour réaliser un nombre n de séquences de parachutage supplémentaires, n étant un entier supérieur ou égal à 1 :
   . on guide l'aéronef automatiquement pour qu'il réalise n fois ledit circuit de vol ; et
   . lors de ce guidage, à chaque passage de l'aéronef entre ledit point de lâcher et ledit premier point d'extrémité le long de ladite droite de référence, on réalise le lâcher d'éléments à parachuter.

Ainsi, grâce à l'invention, on peut réaliser automatiquement autant de séquences de parachutage que nécessaire.

De façon avantageuse, pour déterminer ledit circuit de vol, on détermine :
- un premier point auxiliaire qui est situé dans un plan horizontal contenant ladite droite de référence, à une distance particulière dudit second point d'extrémité, le segment de droite formé par ledit premier point auxiliaire et ledit second point d'extrémité étant orthogonal à ladite droite de référence ;
- un second point auxiliaire qui est situé dans ledit plan horizontal, le segment de droite formé par lesdits premier et second points auxiliaires étant parallèle à ladite droite de référence et orthogonal au segment de droite formé par ledit second point auxiliaire et ledit point d'alignement ; et
- ledit circuit de vol comme un circuit qui est susceptible d'être suivi par l'aéronef dans ledit plan horizontal et qui passe successivement par ledit second point d'extrémité, ledit premier point auxiliaire, ledit second point auxiliaire et ledit point d'alignement, avant de rejoindre de nouveau ledit second point d'extrémité en suivant ladite droite de référence.

De préférence, ladite droite de référence et les points précités qui s'y trouvent sont à chaque fois mis à jour en fonction des caractéristiques du parachutage suivant.

Avantageusement, on détermine ledit premier point auxiliaire à l'aide des paramètres modifiables suivants : ladite distance particulière et le sens de rotation de l'aéronef après ledit second point d'extrémité.

Dans un premier mode de réalisation, on détermine un nombre p de séquences de parachutage avant le vol de l'aéronef, p étant un entier supérieur ou égal à 1, et lors du vol on commande automatiquement l'aéronef pour réaliser ladite première séquence de parachutage et le cas échéant un nombre p-1 de séquences de parachutage supplémentaires.

Dans un second mode de réalisation, au cours du vol, on commande une séquence de parachutage supplémentaire, avant d'arriver audit second point d'extrémité.

La présente invention concerne également un dispositif d'aide au parachutage d'un aéronef, pour aider à parachuter à partir dudit aéronef des éléments sur une zone de réception au sol, selon la revendication 6.

Selon l'invention, ledit dispositif est remarquable en ce qu'il comporte :
- des premiers moyens permettant à un opérateur d'entrer des paramètres ;
- des deuxièmes moyens pour déterminer automatiquement à l'aide desdits paramètres un circuit de vol destiné à une séquence de parachutage ;
- des troisièmes moyens pour faire suivre automatiquement audit aéronef au moins une fois ledit circuit de vol, en vue d'une séquence de parachutage ; et
- des quatrièmes moyens pour indiquer la possibilité de lâcher des éléments à parachuter, lorsque l'aéronef se trouve sur une droite de référence dudit circuit de vol, entre deux points prédéterminés.

Dans un mode de réalisation particulier, lesdits troisièmes moyens comprennent :
- des cinquièmes moyens pour déterminer des ordres de guidage permettant audit aéronef de suivre ledit circuit de vol ; et
- des sixièmes moyens pour appliquer lesdits ordres de guidage à des moyens de guidage dudit aéronef.

En outre, de façon avantageuse, ledit dispositif comporte de plus :
- des moyens d'affichage ; et/ou
- des moyens de commande permettant à un opérateur de commander une séquence de parachutage supplémentaire ; et/ou
- des moyens de commande permettant à un opérateur de commander une annulation d'au moins une séquence de parachutage ; et/ou
- des moyens d'actionnement permettant à un opérateur d'annuler toute action ou commande précédente de sa part.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

La figure 2 est un schéma illustrant le vol d'un aéronef en vue d'un parachutage, conformément à l'invention.

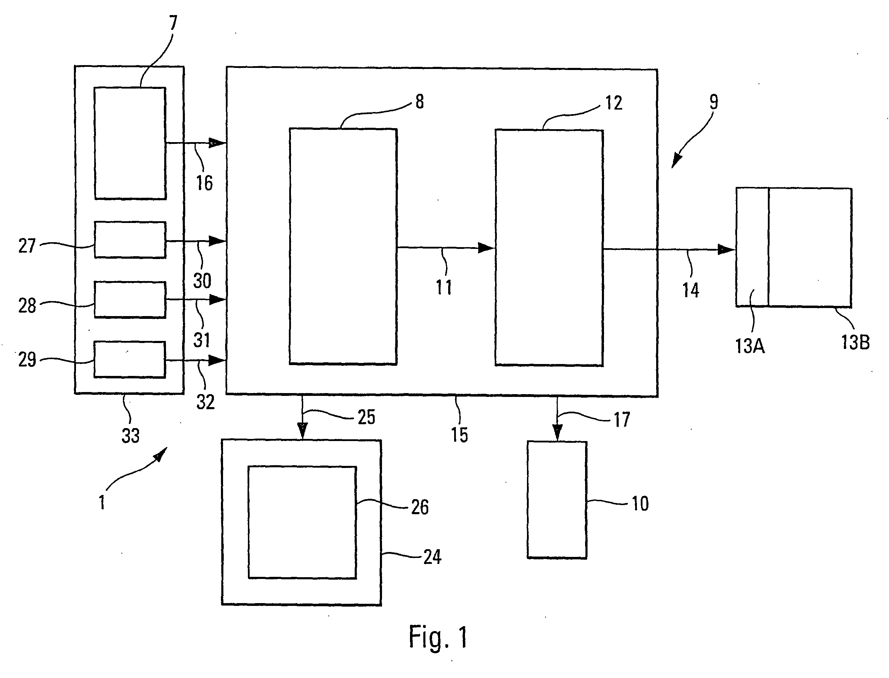

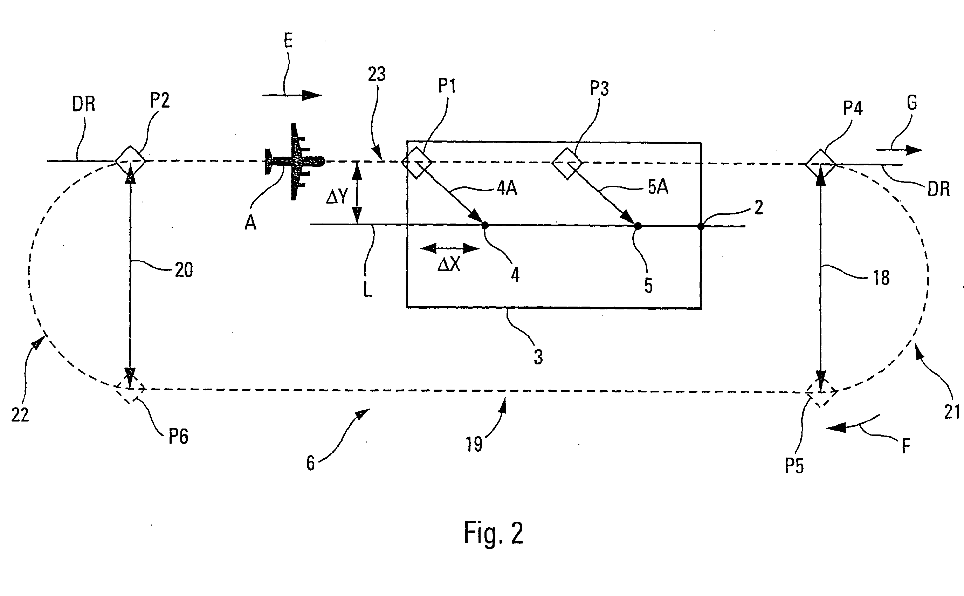

Le dispositif 1 conforme à l'invention et représenté schématiquement sur la figure 1 est destiné à aider un pilote d'un aéronef A, en particulier d'un avion de transport militaire, lors d'un parachutage à partir dudit aéronef d'éléments, notamment des troupes et/ou du matériel, qui doivent être parachutés sur une zone de réception 3 au sol, représentée sur la figure 2.

De façon usuelle, pour réaliser un parachutage, on détermine :
- un point de lâcher P1 où les éléments à parachuter doivent être lâchés dudit aéronef A. Ledit point de lâcher P1 est déterminé pour que les éléments qui sont parachutés à partir de ce dernier, comme illustré par une flèche 4A, touchent le sol à un point de réception 4 prédéterminé qui est bien entendu situé sur ladite zone de réception 3 au sol. En plus d'un écart vertical (le point 4 se trouvant au sol et le point P1 à l'altitude de vol de l'aéronef A), ledit point P1 présente un écart longitudinal ΔX et un écart latéral ΔY par rapport audit point 4. Ces écarts ΔX et ΔY dépendent d'une pluralité de paramètres tels que la force et la direction du vent, le type de parachute utilisé ou la position de la charge à parachuter à l'intérieur de l'aéronef A ;
- un point d'alignement P2 qui forme avec ledit point de lâcher P1 une droite de référence DR qui est parallèle à un axe L prévu sur la zone de réception 3. De préférence, ladite zone de réception 3 est rectangulaire et l'axe L est l'axe longitudinal de symétrie de cette zone 3 rectangulaire, le point de réception 4 étant situé sur cet axe L. Ledit point d'alignement P2 est situé à une distance prédéterminée d1 dudit point de lâcher P1, en amont de ce dernier dans le sens E de vol de l'aéronef A ;
- un point d'extrémité P3 qui est situé sur ladite droite de référence DR en aval dudit point de lâcher P1 à une distance d2 de ce dernier, à un point où le lâcher des éléments à parachuter doit cesser pour éviter qu'ils dépassent ladite zone de réception 3 et donc un point d'extrémité 2 situé sur l'axe L. Dans l'exemple représenté, un parachutage à partir du point P3 atteint en principe le sol à un point 5, comme illustré par une flèche 5A. La distance entre lesdits points 2 et 5 sert de marge de sécurité ; et
- un point d'extrémité P4 qui est situé sur ladite droite de référence DR en aval dudit point d'extrémité P3 à une distance d3 de ce dernier, à un point où se termine une séquence de parachutage.

Aussi, pour réaliser une séquence de parachutage :
- on guide l'aéronef A le long de ladite droite de référence DR ; et
- lors de ce guidage, on réalise le lâcher d'au moins certains desdits éléments à parachuter, et ceci uniquement entre ledit point de lâcher P1 et ledit point d'extrémité P3.

Selon l'invention, pour pouvoir réaliser des parachutages supplémentaires, notamment au cas où un seul passage au-dessus de la zone de réception 3 est insuffisant :
- on détermine un circuit de vol 6 permettant à l'aéronef A de revenir, à partir dudit point d'extrémité P4, audit point d'alignement P2, puis de suivre de nouveau ladite droite de référence DR jusqu'audit point d'extrémité P4 ; et
- pour réaliser un nombre n de séquences de parachutage supplémentaires, n étant un entier supérieur ou égal à 1 :
   . on guide l'aéronef A automatiquement pour qu'il vole n fois autour dudit circuit de vol 6 ; et
   . lors de ce guidage, à chaque passage de l'aéronef A entre ledit point de lâcher P1 et ledit point d'extrémité P3 le long de ladite droite de référence DR, on réalise le lâcher d'éléments à parachuter.

Pour ce faire, ledit dispositif 1 comporte :
- des moyens 7 permettant à un opérateur d'entrer des paramètres précisés ci-dessous ;
- des moyens 8 pour déterminer automatiquement à l'aide desdits paramètres ledit circuit de vol 6 ;
- des moyens 9 pour faire suivre automatiquement audit aéronef A au moins une fois ledit circuit de vol 6, en vue d'une séquence de parachutage ; et
- des moyens 10 pour indiquer la possibilité de lâcher des éléments à parachuter, lorsque l'aéronef A se trouve sur la droite de référence DR dudit circuit de vol 6, entre lesdits points P1 et P3. Lesdits moyens 10 peuvent notamment comporter des moyens lumineux qui sont prévus dans la soute et qui donnent l'autorisation au largueur de réaliser le lâcher des troupes ou du matériel à parachuter.

Lesdits moyens 9 qui sont reliés par une liaison 11 au moyen 8, comprennent :
- des moyens 12 usuels, pour déterminer des ordres de guidage permettant audit aéronef A de suivre ledit circuit de vol 6 ; et
- des moyens 13A usuels, notamment des actionneurs, pour appliquer lesdits ordres de guidage à des moyens de guidage 13B usuels, tels que des gouvernes (de direction, de profondeur, ...), dudit aéronef A.

Lesdits moyens 8 et 12 peuvent être regroupés dans une unité centrale 15 qui est reliée par des liaisons 16 et 17 auxdits moyens 7 et 10.

On notera que, selon l'invention, la droite de référence DR et les points P1, P2, P3 et P4 situés sur cette droite de référence DR sont mis à jour, de préférence avant chaque nouveau parachutage, en fonction de caractéristiques de ce nouveau parachutage.

Selon l'invention, pour déterminer ledit circuit de vol 6, lesdits moyens 8 déterminent :
- un point auxiliaire P5 qui est situé dans un plan horizontal contenant ladite droite de référence DR, à une distance d4 dudit point d'extrémité P4. Le segment de droite 18 (de longueur d4) formé par ledit point auxiliaire P5 et ledit point d'extrémité P4 est orthogonal à ladite droite de référence DR ; et
- un point auxiliaire P6 qui est également situé dans ledit plan horizontal et qui est tel que le segment de droite 19 formé par lesdits points auxiliaires P5 et P6 est parallèle à ladite droite de référence DR et orthogonal au segment de droite 20 (également de longueur d4) formé par ledit point auxiliaire P6 et ledit point d'alignement P2.

Ledit circuit de vol 6 est alors défini comme un circuit qui est susceptible d'être suivi par l'aéronef A dans ledit plan horizontal et qui passe successivement (comme illustré par une flèche F sur la figure 2) par ledit point d'extrémité P4, ledit point auxiliaire P5, ledit point auxiliaire P6 et ledit point d'alignement P2, avant de rejoindre de nouveau ledit point d'extrémité P4.

Ce circuit de vol 6 comporte donc :
- un arc de cercle 21 susceptible d'être suivi par l'aéronef A entre les points P4 et P5 ;
- ledit segment de droite 19 entre lesdits points P5 et P6 ;
- un arc de cercle 22 susceptible d'être suivi par l'aéronef A entre les points P6 et P2 ; et
- un segment de droite 23 entre les points P2 et P4, faisant partie de ladite droite de référence DR.

Pour ce faire, lesdits moyens 7 permettent à un opérateur d'entrer ladite distance d4 dans l'unité centrale 15, ainsi que le sens de rotation F (à droite ou à gauche) pour le vol de l'aéronef A après ledit point d'extrémité P4.

Dans un mode de réalisation particulier, les moyens 8 sont formés pour choisir un sens de rotation par défaut au cas où cette information n'est pas entrée à l'aide des moyens 7. De préférence, lesdits moyens 8 choisissent alors comme sens de rotation, celui qui permet de garder la zone de parachutage, du côté gauche de l'aéronef A, lorsque celui-ci volera le segment de droite 19, de façon à ce que le pilote puisse toujours avoir cette zone en visuel.

Bien entendu, les moyens 7 permettent également à un opérateur d'entrer les informations telles que les distances d1, d2 et d3 par exemple, qui sont nécessaires auxdits moyens 8 pour déterminer lesdits points P1, P2, P3 et P4, comme indiqué ci-dessus.

En outre, ledit dispositif 1 comporte de plus :
- des moyens d'affichage 24 qui sont reliés par une liaison 25 à l'unité centrale 15 et qui sont susceptibles d'afficher sur un écran de visualisation 26 des informations concernant le parachutage ;
- des moyens de commande 27 permettant à un opérateur de commander une séquence de parachutage supplémentaire ;
- des moyens de commande 28 permettant à un opérateur de commander une annulation d'au moins une séquence de parachutage ; et
- des moyens d'actionnement 29 permettant à un opérateur d'annuler toute action ou commande précédente, notamment en cas d'erreur.

Lesdits moyens 27 à 29 sont reliés par des liaisons 30 à 32 à l'unité centrale 15.

De plus, lesdits moyens 7 et 27 à 29 peuvent être regroupés dans une seule et même interface 33, notamment un clavier et/ou une souris d'ordinateur, qui est par exemple susceptible de coopérer avec ledit écran de visualisation 26.

Ainsi, grâce au dispositif 1 conforme à l'invention :
A/ lors de la préparation de la mission, l'équipage peut définir le nombre total de séquences de parachutage, à l'aide des moyens 7. Lorsque plus d'une séquence de parachutage est prévu de sorte que l'aéronef A doit suivre au moins une fois le circuit de vol 6, les points P5 et P6 peuvent être entrés dans le plan de vol. Ainsi, l'aéronef A pourra suivre automatiquement ledit circuit de vol 6 ;
B/ lors du vol, avant d'atteindre ledit point d'extrémité P4, l'équipage peut modifier à tout instant le nombre de séquences de parachutage prévues, à l'aide des moyens de commande 27 et 28. En effet, à l'aide desdits moyens de commande 27, il peut commander au moins une séquence de parachutage supplémentaire, et à l'aide desdits moyens de commande 28, il peut commander l'annulation d'au moins une séquence de parachutage prévue précédemment ; et
C/ lorsque les séquences de parachutage sont terminées, l'aéronef A poursuit son vol conformément au plan de vol, après le point P4, dans le sens illustré par une flèche G sur la figure 2.

Ainsi, grâce à l'invention, lorsque plus d'une séquence de parachutage est prévue avant l'arrivée au point P4, l'équipage peut :
- suivre la mission planifiée. Aucune action n'est alors à réaliser. En effet, dans ce cas, à partir du point P4, l'aéronef A rejoint le point P5 et vole le long du circuit de vol 6, autant de fois que planifié ; ou
- commander une nouvelle séquence de parachutage, si nécessaire, à l'aide des moyens de commande 27 ; ou
- commander une sortie de la phase de parachutage, à l'aide des moyens de commande 28, et poursuivre le plan de vol.

En outre, lorsqu'une seule séquence de parachutage est prévue (qui est effectuée lors d'un premier passage de l'aéronef entre les points P1 et P3), l'équipage peut :
- suivre la mission planifiée. Aucune action n'est alors à réaliser. Après le point P4, l'aéronef poursuit le plan de vol, comme illustré par la flèche G ; ou
- avant d'atteindre le point P4, commander, si nécessaire, une nouvelle séquence de parachutage, à l'aide des moyens de commande 27.

## Revendications

1. Procédé de parachutage à partir d'un aéronef (A) d'éléments à parachuter sur une zone de réception (3) au sol, procédé selon lequel :
- on détermine :
. un point de lâcher (P1) où les éléments à parachuter doivent être lâchés dudit aéronef (A), ledit point de lâcher (P1) dépendant d'un point de réception prédéterminé (4) situé sur ladite zone de réception (3) au sol ; **caractérisé en ce que :**
- on détermine, de plus,
· un point d'alignement (P2) qui forme avec ledit point de lâcher (P1) une droite de référence (DR) qui est parallèle à un axe (L) prévu sur la zone de réception (3), ledit point d'alignement (P2) étant situé à une distance prédéterminée dudit point de lâcher (P1), en amont de ce dernier dans le sens de vol (E) de l'aéronef (A) ;
· un premier point d'extrémité (P3) qui est situé sur ladite droite de référence (DR) en aval dudit point de lâcher (P1), à un point où le lâcher des éléments à parachuter doit cesser pour éviter qu'ils dépassent ladite zone de réception (3) ; et
· un second point d'extrémité (P4) qui est situé sur ladite droite de référence (DR) en aval dudit premier point d'extrémité (P3), à un point où se termine une séquence de parachutage ; et
- pour réaliser une première séquence de parachutage :
· on guide l'aéronef (A) le long de ladite droite de référence (DR) ; et
· lors de ce guidage, on réalise le lâcher d'au moins certains desdits éléments à parachuter, et ceci uniquement entre ledit point de lâcher (P1) et ledit premier point d'extrémité (P3), et
- on détermine, de plus, un circuit de vol (6) permettant à l'aéronef (A) de revenir, à partir dudit second point d'extrémité (P4), audit point d'alignement (P2), puis de suivre ladite droite de référence (DR) jusqu'audit second point d'extrémité (P4) ; et
- pour réaliser un nombre n de séquences de parachutage supplémentaires, n étant un entier supérieur ou égal à 1 :
· on guide l'aéronef (A) automatiquement pour qu'il réalise n fois ledit circuit de vol (6) ; et
· lors de ce guidage, à chaque passage de l'aéronef (A) entre ledit point de lâcher (P1) et ledit premier point d'extrémité (P3) le long de ladite droite de référence (DR), on réalise le lâcher d'éléments à parachuter.

2. Procédé selon la revendication 1,
**caractérisé en ce que**, pour déterminer ledit circuit de vol (6), on détermine :
- un premier point auxiliaire (P5) qui est situé dans un plan horizontal contenant ladite droite de référence (DR), à une distance particulière dudit second point d'extrémité (P4), le segment de droite (18) formé par ledit premier point auxiliaire (P5) et ledit second point d'extrémité (P4) étant orthogonal à ladite droite de référence (DR) ;
- un second point auxiliaire (P6) qui est situé dans ledit plan horizontal, le segment de droite (19) formé par lesdits premier et second points auxiliaires (P5, P6) étant parallèle à ladite droite de référence (DR) et orthogonal au segment de droite (20) formé par ledit second point auxiliaire (P6) et ledit point d'alignement (P2) ; et
- ledit circuit de vol (6) comme un circuit qui est susceptible d'être suivi par l'aéronef (A) dans ledit plan horizontal et qui passe successivement par ledit second point d'extrémité (P4), ledit premier point auxiliaire (P5), ledit second point auxiliaire (P6) et ledit point d'alignement (P2), avant de rejoindre de nouveau ledit second point d'extrémité (P4) en suivant ladite droite de référence (DR).

3. Procédé selon la revendication 2,
**caractérisé en ce que** l'on détermine ledit premier point auxiliaire (P5) à l'aide des paramètres modifiables suivants : ladite distance particulière et le sens de rotation (F) de l'aéronef (A) après ledit second point d'extrémité (P4).

4. Procédé selon l'une quelconque des revendications 1 à 3,
**caractérisé en ce que** l'on détermine un nombre p de séquences de parachutage avant le vol de l'aéronef (A), p étant un entier supérieur ou égal à 1, et lors du vol on commande automatiquement l'aéronef (A) pour réaliser ladite première séquence de parachutage et le cas échéant un nombre p-1 de séquences de parachutage supplémentaires.

5. Procédé selon l'une quelconque des revendications 1 à 4,
**caractérisé en ce que**, au cours du vol, on commande une séquence de parachutage supplémentaire, avant d'arriver audit second point d'extrémité (P4).

6. Dispositif d'aide au parachutage d'un aéronef (A) pour aider à parachuter à partir dudit aéronef (A) des éléments sur une zone de réception (3) au sol, ledit dispositif comportant des premiers moyens (7) permettant à un opérateur d'entrer des paramètres et des moyens pour déterminer un point de lâcher (P1) où les éléments à parachuter doivent être lâchés dudit aéronef (A), ledit point de lâcher (P1) dépendant d'un point de réception prédéterminé (4) situé sur ladite zone de réception (3) au sol,
**caractérisé en ce qu**'il comporte de plus :
- des deuxièmes moyens (8) pour déterminer automatiquement, à partir des paramètres entrés à l'aide desdits premiers moyens (7), un circuit de vol (6) destiné à une séquence de parachutage, lesdits deuxièmes moyens (8) comprenant :
· lesdits moyens pour déterminer le point de lâcher (P1) où les éléments à
parachuter doivent être lâchés dudit aéronef (A) ;
· des moyens pour déterminer un point d'alignement (P2) qui forme avec ledit point de lâcher (P1) une droite de référence (DR) qui est parallèle à un axe (L) prévu sur la zone de réception (3), ledit point d'alignement (P2) étant situé à une distance prédéterminée dudit point de lâcher (P1), en amont de ce dernier dans le sens de vol (E) de l'aéronef (A) ;
· des moyens pour déterminer un premier point d'extrémité (P3) qui est situé sur ladite droite de référence (DR) en aval dudit point de lâcher (P1), à un point où le lâcher des éléments à parachuter doit cesser pour éviter qu'ils dépassent ladite zone de réception (3) ;
· des moyens pour déterminer un second point d'extrémité (P4) qui est situé sur ladite droite de référence (DR) en aval dudit premier point d'extrémité (P3), à un point où se termine une séquence de parachutage ; et
· des moyens pour déterminer ledit circuit de vol (6) permettant à l'aéronef (A) de revenir, à partir dudit second point d'extrémité (P4), audit point d'alignement (P2), puis de suivre ladite droite de référence (DR) jusqu'audit second point d'extrémité (P4) ;
- des troisièmes moyens (9) pour faire suivre automatiquement audit aéronef (A) au moins une fois ledit circuit de vol (6), en vue d'une séquence de parachutage ; et
- des quatrièmes moyens (10) pour donner l'autorisation de lâcher des éléments à parachuter, lorsque l'aéronef (A) se trouve sur ladite droite de référence (DR) dudit circuit de vol (6), entre ledit point de lâcher (P1) et ledit premier point d'extrémité (P3).

7. Dispositif selon la revendication 6,
**caractérisé en ce que** lesdits troisièmes moyens (9) comprennent :
- des cinquièmes moyens (12) pour déterminer des ordres de guidage permettant audit aéronef de suivre ledit circuit de vol (6) ; et
- des sixièmes moyens (13A) pour appliquer lesdits ordres de guidage à des moyens de guidage (13B) dudit aéronef (A).

8. Dispositif selon l'une des revendications 6 et 7,
**caractérisé en ce qu**'il comporte, de plus, des moyens d'affichage (24).

9. Dispositif selon l'une quelconque des revendications 6 à 8,
**caractérisé en ce qu'**il comporte, de plus, des moyens de commande (27) permettant à un opérateur de commander une séquence de parachutage supplémentaire.

10. Dispositif selon l'une quelconque des revendications 6 à 9,
**caractérisé en ce qu**'il comporte, de plus, des moyens de commande (28) permettant à un opérateur de commander une annulation d'au moins une séquence de parachutage.

11. Dispositif selon l'une quelconque des revendications 6 à 10,
**caractérisé en ce qu**'il comporte, de plus, des moyens d'actionnement (29) permettant à un opérateur d'annuler toute commande précédente de sa part.

12. Aéronef,
**caractérisé en ce qu**'il comporte un dispositif (1) tel que celui spécifié sous l'une quelconque des revendications 6 à 11.

## Claims

1. A method of parachuting items to be parachuted from an aircraft (A) onto a reception area (3) on the ground, according to which:
- there is determined:
• a release point (P1) where the items to be parachuted must be released from the said aircraft (A), the said release point (P1) depending on a predetermined reception point (4) located on the said reception area (3) on the ground;
**characterized in that** :
- there is furthermore determined :
• an alignment point (P2) which forms, with the said release point (P1), a straight reference line (DR) which is parallel with a center line (L) provided on the reception area (3), the said alignment point (P2) being located at a predetermined distance from the said release point (P1), upstream of the latter in the direction of flight (E) of the aircraft (A); a first end point (P3) which is located on the said straight reference line (DR) downstream of the said release point (P1), at a point where the release of the items to be parachuted must stop in order to prevent them from overshooting the said reception area (3); and
• a second end point (P4) which is located on the said straight reference line (DR) downstream of the said first end point (P3), at a point where a parachuting sequence is ended; and
- in order to carry out a first parachuting sequence:
• the aircraft (A) is guided along the said straight reference line (DR); and
• during this guidance, the release of at least some of the said items to be parachuted is carried out, and this is done uniquely between the said release point (P1) and the said first end point (P3), and
- there is furthermore determined a flight circuit (6) making it possible for the aircraft (A) to return, from the said second end point (P4), to the said alignment point (P2), and then to follow the said straight reference line (DR) until it reaches the said second end point (P4); and
- in order to carry out a number n of additional parachuting sequences, n being an integer greater than or equal to 1:
• the aircraft (A) is guided automatically in such a way that it completes the said flight circuit (6) n times; and
• during this guidance, each time the aircraft (A) passes between the said release point (P1) and the said first end point (P3) along the said straight reference line (DR), the release of items to be parachuted is carried out.

2. The method as claimed in claim 1,
**characterized in that**, in order to determine the said flight circuit (6), there is determined:
- a first auxiliary point (P5) which is located in a horizontal plane containing the said straight reference line (DR), at a particular distance from the said second end point (P4), the segment of straight line (18) formed by the said first auxiliary point (P5) and the said second end point (P4) being perpendicular to the said straight reference line (DR) ;
- a second auxiliary point (P6) which is located in the said horizontal plane, the segment of straight line (19) formed by the said first and second auxiliary points (P5, P6) being parallel with the said straight reference line (DR) and perpendicular to the segment of straight line (20) formed by the said second auxiliary point (P6) and the said alignment point (P2); and
- the said flight circuit (6) as a circuit that is able to be followed by the aircraft (A) in the said horizontal plane and which passes successively through the said second end point (P4), the said first auxiliary point (P5), the said second auxiliary point (P6) and the said alignment point (P2), before rejoining the said second end point (P4) again by following the said straight reference line (DR).

3. The method as claimed in claim 2,
**characterized in that** the said first auxiliary point (P5) is determined with the help of the following modifiable parameters: the said particular distance and the direction of turn (F) of the aircraft (A) after the said second end point (P4).

4. The method as claimed in any one of claims 1 to 3,
**characterized in that** there is determined a number p of parachuting sequences before the flight of the aircraft (A), p being an integer greater than or equal to 1, and during the flight the aircraft (A) is automatically controlled in order to carry out the said first parachuting sequence and, if applicable, a number p-1 of additional parachuting sequences.

5. The method as claimed in any one of claims 1 to 4,
**characterized in that**, during the flight, an additional parachuting sequence is commanded before arriving at the said second end point (P4).

6. A parachuting aid device for an aircraft (A), in order to assist in parachuting items from the said aircraft (A) onto a reception area (3) on the ground, said device comprising first means (7) making it possible for an operator to enter parameters and means for determining a release point (P1) where the items to be parachuted must be released from the said aircraft (A), the said release point (P1) depending on a predetermined reception point (4) located on the said reception area (3) on the ground,
**characterized in that** it furthermore comprises :
- second means (8) for automatically determining, with the help of the said parameters, a flight circuit (6) intended for a parachuting sequence, the said second means (8) comprising:
• means for determining a release point (P1) where the items to be parachuted must be released from the said aircraft (A), the said release point (P1) depending on a predetermined reception point (4) located on the said reception area (3) on the ground;
• means for determining an alignment point (P2) which forms, with the said release point (P1), a straight reference line (DR) which is parallel with a center line (L) provided on the reception area (3), the said alignment point (P2) being located at a predetermined distance from the said release point (P1), upstream of the latter in the direction of flight (E) of the aircraft (A);
• means for determining a first end point (P3) which is located on the said straight reference line (DR) downstream of the said release point (P1), at a point where the release of the items to be parachuted must stop in order to prevent them from overshooting the said reception area (3);
• means for determining a second end point (P4) which is located on the said straight reference line (DR) downstream of the said first end point (P3), at a point where a parachuting sequence is ended; and
• means for determining the said a flight circuit (6) making it possible for the aircraft (A) to return, from the said second end point (P4), to the said alignment point (P2), and then to follow the said straight reference line (DR) until it reaches the said second end point (P4) ;
- third means (9) for automatically making the said aircraft (A) follow the said flight circuit (6) at least once, for the purpose of a parachuting sequence; and
- fourth means (10) for giving the authorization of releasing items to be parachuted, when the aircraft
(A) is on the said straight reference line (DR) of the said flight circuit (6), between the said release point (P1) and the said first end point (P3).

7. The device as claimed in claim 6,
**characterized in that** the said third means (9) comprise:
- fifth means (12) for determining guidance commands making it possible for the said aircraft to follow the said flight circuit (6); and
- sixth means (13A) for applying the said guidance commands to guidance means (13B) of the said aircraft (A).

8. The device as claimed in any one of claims 6 and 7,
**characterized in that** it furthermore comprises display means (24) .

9. The device as claimed in any one of claims 6 and 7,
**characterized in that** it furthermore comprises control means (27) making it possible for an operator to command an additional parachuting sequence.

10. The device as claimed in any one of claims 6 to 9,
**characterized in that** it furthermore comprises control means (28) making it possible for an operator to command a cancellation of at least one parachuting sequence.

11. The device as claimed in any one of claims 6 to 10,
**characterized in that** it furthermore comprises actuating means (29) making it possible for an operator to cancel any preceding command given by that operator.

12. An aircraft,
**characterized in that** it comprises a device (1) as that claimed in any one of claims 6 to 11.

## Patentansprüche

1. Verfahren für den Fallschirmabwurf aus einem Flugzeug (A) von Elementen, die mit Fallschirm über einem Empfangsgebiet (3) am Boden abgeworfen werden sollen, wobei in dem Verfahren:
- bestimmt wird:
• ein Abwurfpunkt (P1), an welchem die mit Fallschirm abzuwerfenden Elemente vom Flugzeug (A) abgeworfen werden müssen, wobei der Abwurfpunkt (P1) abhängig ist von einem vorbestimmten Empfangspunkt (4), der auf dem Empfangsgebiet (3) am Boden liegt;
**dadurch gekennzeichnet, dass**
- ferner bestimmt wird:
• ein Ausrichtungspunkt (P2), der mit dem Abwurfpunkt (P1) eine Bezugsgerade (DR) bildet, die parallel zu einer Achse (L) verläuft, die über dem Empfangsgebiet (3) vorgesehen ist, wobei der Ausrichtungspunkt (P2) in einem vorbestimmten Abstand von dem Abwurfpunkt (P1) stromaufwärts desselben in Flugrichtung (E) des Flugzeugs (A) liegt;
• ein erster Extrempunkt (P3), der auf der Bezugsgeraden (DR) stromabwärts des Abwurfpunktes (P1) an einem Punkt liegt, an welchem der Abwurf der mit Fallschirm abzuwerfenden Elemente abgeschlossen sein muss, um zu vermeiden, dass diese das Empfangsgebiet (3) verfehlen; und
• ein zweiter Extrempunkt (P4), der auf der Bezugsgeraden (DR) stromabwärts des ersten Extrempunktes (P3) an einem Punkt liegt, an welchem eine Folge von Fallschirmabwürfen endet; und
- um eine erste Folge von Fallschirmabwürfen auszuführen:
• das Flugzeug (A) entlang der Bezugsgeraden (DR) geführt wird; und
• während dieser Führung der Abwurf wenigstens einiger der mit Fallschirm abzuwerfenden Elemente durchgeführt wird, und dies nur zwischen dem Abwurfpunkt (P1) und dem ersten Extrempunkt (P3), und
- ferner ein Flugkreis (6) bestimmt wird, der dem Flugzeug (A) ermöglicht, ausgehend vom dem zweiten Extrempunkt (P4) zu dem Ausrichtungspunkt (P2) zurückzukommen, dann der Bezugsgeraden (DR) bis zu dem zweiten Extrempunkt (P4) zu folgen; und
- um eine Anzahl n von zusätzlichen Folgen von Fallschirmabwürfen durchzuführen, wobei n eine Zahl größer oder gleich 1 ist:
• das Flugzeug (A) automatisch geführt wird, damit dieses n mal den Flugkreis (6) durchführt; und
• während dieser Führung bei jedem Durchflug des Flugzeugs (A) zwischen dem Abwurfpunkt (P1) und dem ersten Extrempunkt (P3) entlang der Bezugsgeraden (DR) der Abwurf von mit Fallschirm abzuwerfenden Elementen durchgeführt wird.

2. Verfahren nach Anspruch 1,
**dadurch gekennzeichnet, dass** zum Bestimmen des Flugkreises (6) festgelegt wird:
- ein erster Hilfspunkt (P5), der in einer die Bezugsgerade (DR) enthaltenden horizontalen Ebene in einem speziellen Abstand von dem zweiten Extrempunkt (P4) liegt, wobei der Geradenabschnitt (18), der durch den ersten Hilfspunkt (P5) und dem zweiten Hilfspunkt (P4) gebildet wird, senkrecht zu der Bezugsgeraden (DR) verläuft;
- ein zweiter Hilfspunkt (P6), der in der horizontalen Ebene liegt, wobei der Geradenabschnitt (19), der durch den ersten und den zweiten Hilfspunkt (P5, P6) gebildet wird, parallel zu der Bezugsgeraden (DR) und senkrecht zu dem Geradenabschnitt (20) verläuft, der durch den zweiten Hilfspunkt (P6) und den Ausrichtungspunkt (2) gebildet wird; und
- der Flugkreis (6) als ein Kreis, dem das Flugzeug (A) in der horizontalen Ebene folgen kann und der nacheinander durch den zweiten Extrempunkt (P4), den ersten Hilfspunkt (P5), den zweiten Hilfspunkt (P6) und den Ausrichtungspunkt (P2) hindurch geht, bevor er der Bezugsgeraden (DR) folgend aufs Neue an den zweiten Extrempunkt (P4) anknüpft.

3. Verfahren nach Anspruch 2,
**dadurch gekennzeichnet, dass** der erste Hilfspunkt (P5) mit Hilfe von den folgenden veränderbaren Parametern bestimmt wird: dem speziellen Abstand und der Drehrichtung (F) des Flugzeugs (A) nach dem zweiten Extrempunkt (P4).

4. Verfahren nach einem der Ansprüche 1 bis 3,
**dadurch gekennzeichnet, dass** eine Anzahl p von Folgen von Fallschirmabwürfen vor dem Flug des Flugzeugs (A) bestimmt wird, wobei p eine ganze Zahl größer oder gleich 1 ist, und während des Fluges das Flugzeug (A) automatisch gesteuert wird, um die erste Folge von Fallschirmabwürfen und gegebenenfalls ein Anzahl von p-1 von zusätzlichen Folgen von Fallschirmabwürfen durchzuführen.

5. Verfahren nach einem der Ansprüche 1 bis 4,
**dadurch gekennzeichnet, dass** im Verlauf des Fluges eine zusätzliche Folge von Fallschirmabwürfen vor dem Erreichen des zweiten Extrempunktes (P4) gesteuert wird.

6. Vorrichtung zur Unterstützung von Fallschirmabwürfen aus einem Flugzeug (A), um das Abwerfen von Elementen über einem Empfangsgebiet (3) am Boden aus dem Flugzeug (A) mittels Fallschirmen zu ünterstützen, wobei die Vorrichtung aufweist eine erste Einrichtung (7), welche einem Benutzer ermöglicht, Parameter einzugeben, und einer Einrichtung, um einen Abwurfpunkt (P1) zu bestimmen, an welchem die mittels Fallschirm abzuwerfenden Elemente aus dem Flugzeug (A) abgeworfen sein müssen, wobei der Abwurfpunkt (P1) abhängt von einem vorbestimmten Empfangspunkt (4), der auf dem Empfangsgebiet (3) am Boden liegt,
**dadurch gekennzeichnet, dass** diese ferner umfasst:
- eine zweite Einrichtung (8), um automatisch aus dem mit Hilfe der ersten Einrichtung (7) eingegebenen Parameter einen Flugkreis (6) zu bestimmen, der für eine Folge von Fallschirmabwürfen bestimmt ist, wobei die zweite Einrichtung (8) umfasst:
• eine Einrichtung, um den Abwurfpunkt (P1) zu bestimmen, an welchem die mittels Fallschirmen abzuwerfenden Elemente aus dem Flugzeug (A) abgeworfen sein müssen:
• eine Einrichtung, um einen Ausrichtungspunkt (P2) zu bestimmen, der mit dem Abwurfpunkt (P1) eine Bezugsgerade (DR) bildet, die parallel zu einer Achse (L) verläuft, die über dem Empfangsgebiet (3) vorgesehen ist, wobei der Ausrichtungspunkt (P2) in einem vorbestimmten Abstand von dem Abwurfpunkt (P1) stromaufwärts desselben in Flugrichtung (E) des Flugzeugs (A) liegt;
• eine Einrichtung, um einen ersten Extrempunkt (P3) zu bestimmen, der über der Bezugsgeraden (DR) stromabwärts von dem Abwurfpunkt (P1) an einem Punkt liegt, an welchem der Abwurf der mittels Fallschirm abzuwerfenden Elemente abgeschlossen sein muss, um zu vermeiden, dass diese das Empfangsgebiet (3) verfehlen;
• eine Einrichtung, um einen zweiten Extrempunkt (P4) zu bestimmen, der über der Bezugsgeraden (DR) stromabwärts des ersten Extrempunktes (P3) an einem Punkt liegt, an welchem eine Folge von Fallschirmabwürfen endet; und
• eine Einrichtung, um den Flugkreis (6) zu bestimmen, der einem Flugzeug (A) ermöglicht, ausgehend von dem zweiten Extrempunkt (P4) zu dem Ausrichtungspunkt (P2) zurückzukommen und dann der Bezugsgeraden (DR) bis zu dem zweiten Extrempunkt (P4) zu folgen;
- eine dritte Einrichtung (9), um das Flugzeug (A) wenigstens einmal den Flugkreis (6) für eine Folge von Fallschirmabwürfen automatisch folgen zu lassen; und
- eine vierte Einrichtung (10), um eine Genehmigung zu erteilen, die mittels Fallschirm abzuwerfenden Elemente abzuwerfen, wenn sie das Flugzeug (A) über der Bezugsgeraden (DR) des Flugkreises (6) zwischen dem Abwurfpunkt (P1) und dem ersten Extrempunkt (P3) befindet.

7. Vorrichtung nach Anspruch 6,
**dadurch gekennzeichnet, dass** die dritte Einrichtung (9) umfasst:
- eine fünfte Einrichtung (12), um Führungsbefehle zu bestimmen, die dem Flugzeug ermöglichen, dem Flugkreis (6) zu folgen; und
- eine sechste Einrichtung (13A), um die Führungsbefehle an einer Führungseinrichtung (13B) des Flugzeugs (A) anzuwenden.

8. Vorrichtung nach einem der Ansprüche 6 und 7,
**dadurch gekennzeichnet, dass** diese ferner eine Anzeigeeinrichtung (24) umfasst.

9. Vorrichtung nach einem der Ansprüche 6 bis 8,
**dadurch gekennzeichnet, dass** diese ferner eine Steuereinrichtung (27) umfasst, die einem Benutzer ermöglicht, eine zusätzliche Folge von Fallschirmabwürfen zu steuern.

10. Vorrichtung nach einem der Ansprüche 6 bis 9,
**dadurch gekennzeichnet, dass** diese ferner eine Steuereinrichtung (28) umfasst, die einem Benutzer ermöglicht, eine Annullierung wenigstens einer Folge von Fallschirmabwürfen zu steuern.

11. Vorrichtung nach einem der Ansprüche 6 bis 10,
**dadurch gekennzeichnet, dass** diese ferner eine Betätigungseinrichtung (29) umfasst, die einem Benutzer ermöglicht, jeden seiner vorher gehenden Befehle zu annullieren.

12. Flugzeug,
**dadurch gekennzeichnet, dass** dieses eine Vorrichtung (1) umfasst, wie sie in einem der Ansprüche 6 bis 11 angegeben ist.
